# EUROPÄISCHE PATENTSCHRIFT

(11) **EP 2 852 077 B1**
(45) Veröffentlichungstag und Bekanntmachung des Hinweises auf die Patenterteilung: **15.11.2017**
(21) Anmeldenummer: 14183282.4
(22) Anmeldetag: 02.09.2014
(51) Int. Cl.: H04B 10/278, H04J 14/02, H04B 10/572

(54) **Verfahren und System zur verbesserten Datenübertragung in einem Zugangsnetz eines Telekommunikationsnetzes, wobei das Zugangsnetz einen Lichtwellenleiter als Teil des Zugangsnetzes aufweist, Computerprogramm und Computerprogrammprodukt**
Method and system for improved data transfer in an access network of a telecommunications network, wherein the access network has an optical fibre as part of the access network, computer program and computer program product
Procédé et système destinés à la transmission de données améliorée dans un réseau d'accès d'un réseau de télécommunication, le réseau d'accès présentant une fibre optique en tant que partie du réseau d'accès, programme informatique et produit-programme informatique

(30) Priorität: 06.09.2013 DE 102013014769
(43) Veröffentlichungstag der Anmeldung: 25.03.2015
(73) Patentinhaber: Deutsche Telekom AG, 53113 Bonn (DE)
(72) Erfinder: Schatzmayr, Rainer, 53229 Bonn (DE); Lothberg, Peter, Los Altos, CA California 94022 (US)
(74) Vertreter: Schwöbel, Thilo K.

(56) Entgegenhaltungen:
- EP-A1- 1 617 532
- WO-A1-2010/050878
- US-A1- 2012 063 766

## Beschreibung

### Stand der Technik

Die Erfindung betrifft ein Verfahren zur verbesserten Datenübertragung in einem Zugangsnetz eines Telekommunikationsnetzes, wobei das Zugangsnetz einen Lichtwellenleiter als Teil des Zugangsnetzes aufweist.

Die Erfindung betrifft ferner ein System zur verbesserten Datenübertragung in einem Zugangsnetz eines Telekommunikationsnetzes, wobei das System als Teil des Zugangsnetzes einen Lichtwellenleiter, eine Zentraleinheit und eine Mehrzahl von Netzabschlusseinheiten aufweist.

Verfahren zur Übertragung von Daten unter Nutzung ein Lichtwellenleitern sind allgemein bekannt. Beispielsweise gilt für die meisten breitbandigen Telekommunikationsnetze, dass der überwiegende Teil der zu übertragenden Daten über optische Datenübertragungssysteme, insbesondere unter Nutzung von Lichtwellenleitern, übertragen wird. Es soll hierbei - insbesondere aufgrund eines in der Regel ansteigenden Bandbreitenbedarfs - die Datenübertragungskapazität solcher Lichtwellenleiter erhöht werden.

In solchen optischen Datenübertragungssystemen ist es erforderlich, dass eine einen Lichtwellenleiter nutzende Sendeeinrichtung und eine korrespondierende Empfangseinrichtung auf eine gemeinsame Frequenz eingestellt sind, um mit höherer Wahrscheinlichkeit Fehler in der Datenübertragung zu vermeiden, insbesondere zur Reduzierung der Bitfehlerrate (Bit Error Rate, BER), d.h. der Anzahl der in einem Zeitintervall auftretenden Bitfehler. Bereits eine vergleichsweise geringe Fehlabstimmung der benutzten Frequenzen der Sendeeinrichtung bzw. der Empfangseinrichtung erhöht die Wahrscheinlichkeit von Bitfehlern und damit auch die Bitfehlerrate, während größere Abweichungen der benutzten Frequenzen der Sendeeinrichtung bzw. der Empfangseinrichtung die Datenübertragung vollständig unterbrechen.

Typischerweise werden die Sendeeinrichtung bzw. die Empfangseinrichtung auf bestimmte Frequenzen eingestellt und diese Frequenzen anschließend nicht mehr geändert. Es ist jedoch so, dass äußere Einflüsse, insbesondere Temperaturschwankungen, Änderungen der optischen Oszillatoren, Laser oder anderer Komponenten des optischen Datenübertragungssystems herbeiführen, die tatsächlich zu mehr oder weniger großen Frequenzänderungen dieser Komponenten gegenüber den vorgegebenen bzw. (ursprünglich) eingestellten Frequenzen führen. Daher wird in der Regel eine erhöhte Temperaturvariation bzw. insbesondere eine Erhöhung der relativen Temperaturdifferenzen zwischen den beteiligten Komponenten mit einer Verschlechterung der Übertragungsqualität (insbesondere gemessen in Form einer erhöhten Bitfehlerrate) des Telekommunikationssystems einhergehen.

Dieses Verhalten ist insbesondere dann problematisch, wenn eine Seite einer solchen Übertragungsstrecke (entweder die Sendeeinrichtung oder aber die Empfangseinrichtung) in einem temperaturkontrollierten bzw. weitgehend temperaturstabilen Umfeld (insbesondere innerhalb eines Gebäudes bzw. sogar innerhalb eines temperaturstabilisierten Innenraums) angeordnet ist, während die andere Seite der Übertragungsstrecke (d.h. die Empfangseinrichtung oder die Sendeeinrichtung) den Umgebungstemperaturschwankungen ausgesetzt ist, d.h. durchaus maximalen saisonalen und/oder täglichen Temperaturschwankungen zwischen 50 K und 100 K ausgesetzt ist.

Viele optische Datenübertragungsverfahren basieren auf dem Prinzip eines Wellenlängen-Multiplexverfahrens (oder auf englisch Wavelength Division Multiplex (WDM) oder Wavelength Division Multiple Access (WDMA)), bei dem aus verschiedenen einzelnen Wellenlängen bestehende Lichtsignale zur Übertragung in einem Lichtwellenleiter verwendet werden.

Bei Anwendung eines Wellenlängen-Multiplexverfahren auf einer optischen Datenübertragungsstrecke wird das (innerhalb eines Frequenzbandes oder Wellenlängenbandes der optischen Datenkommunikation) zur Verfügung stehende Frequenzspektrum in verschiedene Frequenzkanäle unterteilt. Hierdurch wird (innerhalb des Frequenzbandes) ein Frequenzschema bzw. ein Wellenlängen-Multiplex-Schema definiert. Beispielsweise definiert die Internationale Fernmeldeunion (ITU, International Telecommunication Union) in einer ITU-T Empfehlung ein solches Wellenlängen-Multiplex-Schema, dessen Frequenzkanäle (im 1550 nm-Wellenlängenband, d.h. im sogenannten C-Band (Conventional Band) von ca. 1530 nm Wellenlänge bis 1565 nm Wellenlänge) bei etwa 193,1 THz beginnen und eine Frequenzrasterung (bzw. einen regelmäßigen Frequenzabstand zwischen benachbarten Frequenzkanälen) von 100 GHz oder aber von 50 GHz oder von 25 GHz oder von 12,5 GHz aufweisen. Es ist hierbei erforderlich, dass die jeweils einen Frequenzkanal des betrachteten Lichtwellenleiters benutzenden Netzwerkkomponenten (in der Regel wenigstens eine Sendeeinrichtung und wenigstens eine Empfangseinrichtung) auf den jeweiligen zu benutzenden Frequenzkanal (bzw. dessen charakteristische Frequenz bzw. Mittenfrequenz) eingestellt sind. Der Frequenzabstand zwischen zwei benachbarten Kanälen bzw. der Kanalabstand gibt an, welchen Anteil des Spektrums des Lichtwellenleiters eine Sendeeinrichtung exklusiv beanspruchen kann. Wenn sowohl die Sendeeinrichtung als auch die Empfangseinrichtung auf die gleiche Frequenz (bzw. den gleichen Frequenzkanal bzw. die gleiche Mittenfrequenz des Frequenzkanals) eingestellt sind, ist die Empfangseinrichtung in der Lage, die Bits der von der Sendeeinrichtung übertragenen Daten zu dekodieren. Typischerweise ist bei Benutzung eines solchen Wellenlängen-Multiplex-Schemas bzw. Wellenlängen-Multiplex-Verfahrens sichergestellt, dass solche Daten, die über den gleichen betrachteten Lichtwellenleiter, jedoch unter Benutzung unterschiedlicher Frequenzkanäle übertragen werden, nicht miteinander interferieren, d.h. sich nicht gegenseitig - durch Übersprechen - stören.

Der zuvor angesprochene Effekt einer relativen Frequenzveränderung bei einer relativen Temperaturvariation der Sendeeinrichtung im Vergleich zur Empfangseinrichtung ist bei der Verwendung von Wellenlängen-Multiplex-Verfahren vergleichswiese stark störend, weil die relativ dichte Anordnung der Nutzfrequenzkanäle innerhalb des Spektrums des Wellenlängen-Multiplex-Schemas dazu führt, dass es neben einer Erhöhung der Bitfehlerrate auf dem betroffenen Frequenzkanal unter Umständen auch zu einer Störung der Kommunikation auf Nachbarkanälen (des betrachteten Frequenzkanals) kommt.

Für den Fall bestimmter Netztopologien kommen weitere erschwerende Umstände hinzu. Insbesondere für den Fall, dass an ein und demselben Lichtwellenleiter neben einer (am einen Ende des Lichtwellenleiters angeordneten) hierarchisch höherstehenden Zentraleinheit eine Mehrzahl von (am anderen Ende sowie entlang der Erstreckung des Lichtwellenleiters) und Netzabschlusseinheiten (des optischen Datenübertragungsnetzes) angeschlossen sind, die räumlich verteilt sind - etwa in verschiedenen Straßenzügen oder Wohnvierteln - und entsprechend, zumindest im Allgemeinen, keinen gleichförmigen Temperaturschwankungen ausgesetzt sind, treten unter Umständen gegensätzliche Temperaturschwankungen an einem Teil der Komponenten des optischen Datenübertragungsnetzes gegenüber einem anderen Teil der Komponenten des optischen Datenübertragungsnetzes auf, die unter Umständen auch zu gegenläufigen Frequenzverschiebungen führen können und - insbesondere falls benachbarte Frequenzkanäle des Wellenlängen-Multiplex-Schemas davon betroffen sind - die zuvor angesprochenen Übertragungsstörungen - insbesondere das Übersprechen zwischen den Datenübertragungen auf unterschiedlichen, insbesondere benachbarten, Frequenzkanälen - verstärken können. Verfahren zur Verbesserung der Datenübertragung in Telekommunikationsnetzwerken nach dem Stand der Technik sind aus den Dokumenten US-A-2012/063766, WO-A-2010/050878 und EP-A-1617532 bekannt.

### Offenbarung der Erfindung

Der Erfindung liegt die Aufgabe zugrunde, ein Verfahren und ein System zur verbesserten Datenübertragung in einem Zugangsnetz eines Telekommunikationsnetzes bereitzustellen, wobei das Zugangsnetz einen Lichtwellenleiter als Teil des Zugangsnetzes aufweist, wobei zur Datenübertragung mittels des Lichtwellenleiters ein Wellenlängen-Multiplex-Schema mit einer Mehrzahl von verschiedenen vorgegebenen Multiplex-Frequenzen verwendet wird und wobei mit einfachen Mitteln und in flexibler Weise eine Frequenzanpassung sich entsprechender Sende- bzw. Empfangsfrequenzen ermöglicht wird, obwohl die beiden Seiten der Übertragungsstrecke des Lichtwellenleiters unterschiedlichen Temperaturvariationen unterworfen sind, wobei insbesondere die Zentraleinheit in einem - relativ zu den Temperaturvariationen, denen die Netzabschlusseinheiten ausgesetzt sind - temperaturstabilisierten Umfeld angeordnet sind und obwohl hinsichtlich der Frequenzanpassung - insbesondere zum Ausgleich von Temperaturschwankungen - erschwerte Bedingungen aufgrund der gewählten Netztopologie bzw. aufgrund der vorgegebenen Positionierung der Netzabschlusseinheiten an mehreren Positionen entlang des Lichtwellenleiters vorliegen.
Diese Aufgabe wird erfindungsgemäß gelöst durch ein Verfahren zur verbesserten Datenübertragung in einem Zugangsnetz eines Telekommunikationsnetzes, wobei das Zugangsnetz einen Lichtwellenleiter aufweist, wobei der Lichtwellenleiter zwischen einer Zentraleinheit und einer Mehrzahl von Netzabschlusseinheiten des Zugangsnetzes derart angeordnet ist, dass der Lichtwellenleiter von der Zentraleinheit zu einer ersten Netzabschlusseinheit und von der ersten Netzabschlusseinheit zu wenigstens einer zweiten Netzabschlusseinheit verläuft, wobei zur Datenübertragung mittels des Lichtwellenleiters ein Wellenlängen-Multiplex-Schema mit einer Mehrzahl von verschiedenen vorgegebenen Multiplex-Frequenzen verwendet wird, wobei in einer Aufwärtsrichtung (up-link), von den Netzabschlusseinheiten zur Zentraleinheit, von den Netzabschlusseinheiten eine Mehrzahl von verschiedenen vorgegebenen Multiplex-Sendefrequenzen verwendet wird, wobei eine erste vorgegebene Multiplex-Sendefrequenz der ersten Netzabschlusseinheit und eine zweite vorgegebene Multiplex-Sendefrequenz der zweiten Netzabschlusseinheit zugeordnet ist, wobei zwischen der Zentraleinheit und den Netzabschlusseinheiten ein Dienstkanal vorhanden ist, wobei - wenigstens für den Fall einer ausreichend großen Abweichung einer von der ersten Netzabschlusseinheit tatsächlich verwendeten ersten realen Multiplex-Sendefrequenz von der ersten vorgegebenen Multiplex-Sendefrequenz - von der Zentraleinheit über den Dienstkanal eine erste Dienstinformation zur ersten Netzabschlusseinheit übertragen wird, wobei die erste reale Multiplex-Sendefrequenz in Abhängigkeit der ersten Dienstinformation verändert wird und wobei - wenigstens für den Fall einer ausreichend großen Abweichung einer von der zweiten Netzabschlusseinheit tatsächlich verwendeten zweiten realen Multiplex-Sendefrequenz von der zweiten vorgegebenen Multiplex-Sendefrequenz - von der Zentraleinheit über den Dienstkanal eine zweite Dienstinformation zur zweiten Netzabschlusseinheit übertragen wird, wobei die zweite reale Multiplex-Sendefrequenz in Abhängigkeit der zweiten Dienstinformation verändert wird.

Es ist dadurch gemäß der vorliegenden Erfindung in vorteilhafter Weise möglich, dass trotz des Vorliegens erschwerter Bedingungen - aufgrund der gewählten Anordnung der Netzabschlusseinheiten entlang des Lichtwellenleiters - hinsichtlich der Frequenzanpassung, insbesondere zum Ausgleich von Temperaturschwankungen, eine sichere, und vergleichswiese einfache Anpassung der verwendeten Wellenlängen-Multiplex-Frequenzen möglich ist.

Hierdurch ist es gemäß der vorliegenden Erfindung vorteilhaft möglich, dass auch bei Verwendung einer sogenannten Punkt-zu-Mehrpunkt-Topologie des Zugangsnetzes - d.h. an ein und demselben Lichtwellenleiter, der beispielsweise von einer Zentraleinheit ausgeht und über eine erste Netzabschlusseinheit zu einer zweiten Netzabschlusseinheit verläuft - in einfacher Weise eine Frequenzanpassung der Sendefrequenzen, insbesondere in Aufwärtsrichtung (up-link), derart erfolgen kann, dass eine möglichst hohe Übertragungsbandbreite des Lichtwellenleiters möglich ist (d.h. eine möglichst geringe Bitfehlerrate (BER) realisiert wird).

Erfindungsgemäß ist es insbesondere vorgesehen, dass zwischen der Zentraleinheit und den Netzabschlusseinheiten ein Dienstkanal vorhanden ist, wobei über den Dienstkanal eine Steuerinformation (bzw. eine Dienstinformation) zur Anpassung bzw. zur Veränderung der von den Komponenten innerhalb der Netzabschlusseinheiten verwendeten Frequenzen von der Zentraleinheit zu den Netzabschlusseinheiten (bzw. den dort vorhandenen Netzwerkkomponenten) übertragen wird.

Über den Lichtwellenleiter können in aller Regel sowohl Daten in einer sogenannten down-link-Richtung (d.h. in Abwärtsrichtung) von der Zentraleinheit zu den Netzabschlusseinheiten übertragen werden, als auch in einer sogenannten up-link-Richtung (d.h. in Aufwärtsrichtung) von den einzelnen Netzabschlusseinheiten zur Zentraleinheit übertragen werden (d.h. von der ersten Netzabschlusseinheit über den Lichtwellenleiter zur Zentraleinheit und zusätzlich von der zweiten Netzabschlusseinheit über den Lichtwellenleiter zur Zentraleinheit und (gegebenenfalls) zusätzlich von einer dritten Netzabschlusseinheit über den Lichtwellenleiter zur Zentraleinheit, etc.). Die Begrifflichkeiten Aufwärtsrichtung bzw. Abwärtsrichtung ergeben sich durch die Struktur des Zugangsnetzes, innerhalb dessen es sich bei der Zentraleinheit um eine in der Regel hierarchisch höher stehende Einheit (innerhalb des Zugangsnetzes) handelt als dies bei den Netzabschlusseinheiten der Fall ist, d.h. die Netzabschlusseinheiten sind näher am Hausübergabepunkt bzw. am Gebäudeübergabepunkt eines Netzteilnehmers des Telekommunikationsnetzes als die Zentraleinheit. Insbesondere handelt es sich bei den Netzabschlusseinheiten um den Netzabschluss des optischen Übertragungsnetzes bzw. des optischen Teils des Zugangsnetzes.

Hinsichtlich der Anpassung oder der Veränderung der verwendeten Frequenzen ist es erfindungsgemäß zum einen relevant, dass die Multiplex-Sendefrequenzen innerhalb der Netzabschlusseinheiten angepasst bzw. verändert werden. Dies ist deshalb besonders wichtig, weil eine Fehlanpassung der tatsächlich in einer Netzabschlusseinheit (in Aufwärtsrichtung, d.h. zur Zentraleinheit hin) verwendeten Multiplex-Sendefrequenz (d.h. der Ist-Frequenz) gegenüber der vorgegebenen Multiplex-Sendefrequenz (d.h. der Soll-Frequenz) dazu führt, dass die o.g. Fehlersituationen mit einer höheren Wahrscheinlichkeit auftreten, insbesondere eine Erhöhung der Bitfehlerrate und/oder eine erhöhte Wahrscheinlichkeit des Übersprechens zwischen verschiedenen (insbesondere benachbarten) Frequenzkanälen. Erfindungsgemäß wird vorausgesetzt, dass die in einer an den Lichtwellenleiter angeschlossenen Empfangseinrichtung in der Zentraleinheit tatsächlich angewendete (bzw. erwartete) reale Multiplex-Empfangsfrequenz (d.h. die Ist-Frequenz) für die Kommunikation mit einer der Netzabschlusseinheiten aufgrund der (zumindest relativ zur Temperaturstabilisierung der Netzabschlusseinheiten) vergleichsweise temperaturstabilen bzw. temperaturstabilisierten Anordnung der Zentraleinheit (insbesondere angeordnet in einer temperaturstabilisierten bzw. klimatisierten Umgebung) auch der vorgegebenen Multiplex-Empfangsfrequenz (d.h. der Soll-Frequenz) entspricht. Aufgrund eines innerhalb jedenfalls der Zentraleinheit (beispielsweise innerhalb der Empfangseinrichtung oder auch unter Nutzung einer weiteren Komponente der Zentraleinheit) feststellbaren Unterschieds zwischen der jeweiligen vorgegebenen Multiplex-Sendefrequenz und der tatsächlich (in der Zentraleinheit) empfangen realen Multiplex-Sendefrequenz der betreffenden Netzabschlusseinheit wird erfindungsgemäß die Abweichung zwischen beiden detektiert. Erfindungsgemäß ist es jedenfalls im Fall einer ausreichend großen solchen Abweichung (oder aber auch in regelmäßigen zeitlichen Abständen, d.h. ohne eine (ausreichend große) Abweichung zwischen vorgegebener Multiplex-Sendefrequenz und realer Multiplex-Sendefrequenz) vorgesehen, dass über den Dienstkanal eine Dienstinformation zu der jeweiligen Netzabschlusseinheit übertragen wird, wonach in Abhängigkeit der Dienstinformation die reale Multiplex-Sendefrequenz in Abhängigkeit der jeweiligen Dienstinformation verändert wird. Für den Fall der ersten Netzabschlusseinheit bedeutet dies, dass aufgrund der innerhalb der Zentraleinheit feststellbaren Abweichung zwischen der von der Sendeeinrichtung der ersten Netzabschlusseinheit tatsächlich benutzten ersten realen Multiplex-Sendefrequenz und der ersten vorgegebenen Multiplex-Sendefrequenz über den Dienstkanal eine erste Dienstinformation zu der ersten Netzabschlusseinheit übertragen wird, wonach in Abhängigkeit der ersten Dienstinformation die erste reale Multiplex-Sendefrequenz in Abhängigkeit der ersten Dienstinformation verändert wird. Dies erfolgt erfindungsgemäß jedenfalls im Fall einer ausreichend großen solchen Abweichung oder aber auch in regelmäßigen zeitlichen Abständen. Entsprechend bedeutet dies für die zweite Netzabschlusseinheit, dass aufgrund der innerhalb der Zentraleinheit feststellbaren Abweichung zwischen der von der Sendeeinrichtung der zweiten Netzabschlusseinheit tatsächlich benutzten zweiten realen Multiplex-Sendefrequenz und der zweiten vorgegebenen Multiplex-Sendefrequenz über den Dienstkanal eine zweite Dienstinformation zu der zweiten Netzabschlusseinheit übertragen wird, wonach in Abhängigkeit der zweiten Dienstinformation die zweite reale Multiplex-Sendefrequenz in Abhängigkeit der zweiten Dienstinformation verändert wird.

Erfindungsgemäß ist es besonders bevorzugt vorgesehen, dass in der Zentraleinheit (d.h. in der Empfangsstation der optischen Übertragungsstrecke des Lichtwellenleiters für die Aufwärtsrichtung der Datenübertragung) wenigstens eine Referenzfrequenz gebildet wird, mit der die von den Netzabschlusseinheiten tatsächlich verwendeten realen Multiplex-Sendefrequenzen verglichen werden, so dass die Abweichung zwischen beiden detektiert werden kann. Dies kann erfindungsgemäß entweder dadurch erfolgen, dass für jede verwendete reale Multiplex-Sendefrequenz eine jeweils zugehörige (unterschiedliche) Referenzfrequenz in der Zentraleinheit gebildet wird (d.h. für die Bestimmung der Abweichung zwischen der verwendeten ersten realen Multiplex-Sendefrequenz und der ersten vorgegebenen Multiplex-Sendefrequenz wird eine erste Referenzfrequenz verwendet und für die Bestimmung der Abweichung zwischen der verwendeten zweiten realen Multiplex-Sendefrequenz und der zweiten vorgegebenen Multiplex-Sendefrequenz wird eine zweite (sich von der ersten Referenzfrequenz unterscheidende) Referenzfrequenz verwendet, etc). Alternativ hierzu ist es erfindungsgemäß ebenfalls möglich, dass lediglich eine Referenzfrequenz verwendet wird, mit deren Hilfe die Abweichung der von den jeweiligen Netzabschlusseinheiten tatsächlich verwendeten realen Multiplex-Sendefrequenz von der entsprechenden vorgegebenen Multiplex-Sendefrequenz bestimmt wird (d.h. für die Bestimmung der Abweichung zwischen der verwendeten ersten realen Multiplex-Sendefrequenz und der ersten vorgegebenen Multiplex-Sendefrequenz wird eine Referenzfrequenz verwendet, die auch für die Bestimmung der Abweichung zwischen der verwendeten zweiten realen Multiplex-Sendefrequenz und der zweiten vorgegebenen Multiplex-Sendefrequenz verwendet wird, etc). Die Generierung bzw. Verwendung der Referenzfrequenz bzw. der Mehrzahl an Referenzfrequenzen findet in der Zentraleinheit statt, so dass vorausgesetzt werden kann, dass die Stabilität (insbesondere die Langzeitstabilität) der Referenzfrequenz bzw. die Stabilität (insbesondere die Langzeitstabilität) der Mehrzahl an Referenzfrequenzen gesichert ist, d.h. eine Veränderung der Referenzfrequenz (bzw. der Mehrzahl an Referenzfrequenzen) aufgrund von Temperaturveränderungen im Laufe der Zeit voraussichtlich nicht oder nur in vernachlässigbarem Maße erfolgt.

Erfindungsgemäß ist es darüberhinaus bevorzugt vorgesehen, dass die Bestimmung der Abweichung auch die Bestimmung des Vorzeichens der Abweichung, d.h. die Bestimmung - neben dem Absolutbetrag der Abweichung (entweder als relativer Messwert oder aber als absoluter Messwert in MHz oder GHz Abweichung) - ob die Differenz zwischen der jeweiligen Soll-Frequenz und der jeweiligen Ist-Frequenz (d.h. beispielsweise die Differenz der von der jeweiligen (etwa ersten oder zweiten oder dritten) Netzabschlusseinheit tatsächlich verwendeten (ersten oder zweiten oder dritten) realen Multiplex-Sendefrequenz von der entsprechenden (ersten oder zweiten oder dritten) vorgegebenen Multiplex-Sendefrequenz) positiv oder negativ ist, d.h. ob die Abweichung der zu vergleichenden Frequenzen durch Vergrößern oder durch Verkleinern der verwendeten Ist-Frequenz (d.h. beispielsweise der verwendeten (ersten oder zweiten oder dritten) realen Multiplex-Sendefrequenz) verringert werden kann. Die Bestimmung des Vorzeichens der Abweichung bzw. jedenfalls des Vorzeichens des Änderungsbedarfs der durch die jeweilige Netzabschlusseinheit verwendeten Ist-Frequenz wird in der Zentraleinheit durchgeführt und mittels der jeweiligen (ersten oder zweiten oder dritten) Dienstinformation an die jeweilige (erste oder zweite oder dritte) Netzabschlusseinheit übertragen, so dass aufgrund der Richtungsinformation der (zur Angleichung von Ist- und Soll-Frequenz) notwendigen Änderung der durch die jeweilige Netzabschlusseinheit verwendeten Ist-Frequenz, die Abweichung der Frequenzen reduziert werden kann.

Erfindungsgemäß ist es bevorzugt vorgesehen und auch für die Abwärtsrichtung relevant, dass in der Abwärtsrichtung (down-link), von der Zentraleinheit zu den Netzabschlusseinheiten, von den Netzabschlusseinheiten eine Mehrzahl von verschiedenen vorgegebenen Multiplex-Empfangsfrequenzen verwendet wird, wobei eine erste vorgegebene Multiplex-Empfangsfrequenz der ersten Netzabschlusseinheit und eine zweite vorgegebene Multiplex-Empfangsfrequenz der zweiten Netzabschlusseinheit zugeordnet ist, wobei die erste reale Multiplex-Empfangsfrequenz in Abhängigkeit der ersten Dienstinformation verändert wird und wobei die zweite reale Multiplex-Empfangsfrequenz in Abhängigkeit der zweiten Dienstinformation verändert wird.

Das bedeutet, dass die Multiplex-Empfangsfrequenzen innerhalb der Netzabschlusseinheiten jeweils angepasst bzw. verändert werden. Eine Fehlanpassung der Multiplex-Empfangsfrequenz innerhalb der Netzabschlusseinheiten führt womöglich mit einer lediglich geringeren Wahrscheinlichkeit (als für den Fall der Multiplex-Sendefrequenz in Aufwärtsrichtung) zu einer Übersprechsituation, jedoch führt eine solche (ausreichend große) Fehlanpassung zu einem Verbindungsabbruch des jeweiligen Datenkanals (zwischen der Zentraleinheit einerseits und der jeweiligen Netzabschlusseinheit). Aufgrund der Voraussetzung, dass die durch eine an den Lichtwellenleiter angeschlossenen Sendeeinrichtung in der Zentraleinheit tatsächlich angewendete reale Multiplex-Sendefrequenz (d.h. die Ist-Frequenz) für die Kommunikation mit der jeweiligen Netzabschlusseinheit aufgrund der vergleichsweise temperaturstabilen Anordnung der Zentraleinheit auch der vorgegebenen Multiplex-Sendefrequenz (d.h. der Soll-Frequenz) entspricht, führt eine Frequenzdrift der Multiplex-Empfangsfrequenz innerhalb einer Netzabschlusseinheit (insbesondere aufgrund einer Temperaturschwankung) zu einer im Sinne einer verbesserten Datenübertragung zu korrigierenden Fehlanpassung. Erfindungsgemäß ist es insbesondere vorgesehen, dass die Korrektur bzw. die Veränderung der Multiplex-Empfangsfrequenz innerhalb der jeweiligen Netzabschlusseinheit aufgrund der jeweiligen (für die Netzabschlusseinheit bestimmte) Dienstinformation erfolgt.

Dies bedeutet, dass gemäß einer Ausführungsvariante der vorliegenden Erfindung die identische Dienstinformation in der jeweiligen Netzabschlusseinheit sowohl zur Änderung bzw. Anpassung der Multiplex-Sendefrequenz als auch zur Änderung bzw. Anpassung der Multiplex-Empfangsfrequenz benutzt wird. Gemäß einer solchen Ausführungsvariante ist es erfindungsgemäß vorgesehen, dass - beispielsweise in einem Speicherbereich der jeweiligen Netzabschlusseinheit, etwa in Form einer Tabelle oder dergleichen - eine vorgegebene und abgelegte Information vorliegt, mittels welcher aus der identischen Dienstinformation (sowohl zur Änderung bzw. Anpassung der Multiplex-Sendefrequenz als auch zur Änderung bzw. Anpassung der Multiplex-Empfangsfrequenz) die jeweilige Änderung bzw. Anpassung der Multiplex-Sendefrequenz und/oder die jeweilige Änderung bzw. Anpassung der Multiplex-Empfangsfrequenz abgeleitbar ist. Beispielsweise gibt die jeweilige Dienstinformation die Änderung bzw. Anpassung der Multiplex-Sendefrequenz (direkt) an und mittels der vorgegebenen Information wird die Änderung bzw. Anpassung der Multiplex-Empfangsfrequenz aus der jeweiligen Dienstinformation abgeleitet oder auch umgekehrt.

Gemäß einer alternativen erfindungsgemäßen Ausführungsform ist es vorgesehen, dass die Dienstinformation einen ersten Steueranteil aufweist, in Abhängigkeit dessen eine Änderung der jeweiligen Multiplex-Sendefrequenz der Netzabschlusseinheit vorgenommen wird, und zusätzlich einen zweiten Steueranteil aufweist, in Abhängigkeit dessen eine Änderung der jeweiligen Multiplex-Empfangsfrequenz der Netzabschlusseinheit vorgenommen wird. Hierbei kann der erste Steueranteil (der ersten Dienstinformation für die erste Netzabschlusseinheit bzw. der zweiten Dienstinformation für die zweite Netzabschlusseinheit, etc.) und der zweite Steueranteil (der ersten Dienstinformation für die erste Netzabschlusseinheit bzw. der zweiten Dienstinformation für die zweite Netzabschlusseinheit, etc.) sowohl in Form der Steuerinformation gemeinsam von der Zentraleinheit zur jeweiligen Netzabschlusseinheit (auf dem Dienstkanal) übertragen werden oder auch getrennt voneinander.

Für den Fall der ersten Netzabschlusseinheit bedeutet dies, dass über den Dienstkanal die erste Dienstinformation zu der ersten Netzabschlusseinheit übertragen wird, wonach in Abhängigkeit der ersten Dienstinformation die erste reale Multiplex-Empfangsfrequenz in Abhängigkeit der ersten Dienstinformation verändert wird. Entsprechend bedeutet dies für die zweite Netzabschlusseinheit, dass über den Dienstkanal die zweite Dienstinformation zu der zweiten Netzabschlusseinheit übertragen wird, wonach in Abhängigkeit der zweiten Dienstinformation die zweite reale Multiplex-Empfangsfrequenz in Abhängigkeit der zweiten Dienstinformation verändert wird.

Erfindungsgemäß ist es insbesondere vorgesehen, dass die erste und/oder die zweite Dienstinformation mit einer vorgegebenen Mindestwiederholrate von der Zentraleinheit über den Dienstkanal übertragen wird.

Hierdurch wird sichergestellt, dass eine ständige Anpassung der jeweils aufeinander abzustimmenden Frequenzen erfolgt. Insbesondere kann so sichergestellt werden, dass eine Kommunikation zwischen der Zentraleinheit einerseits und jeder der an den Lichtwellenleiter angeschlossenen Netzabschlusseinheiten andererseits auch jederzeit sichergestellt werden kann. Dies ist deshalb der Fall, weil erfahrungsgemäß die Frequenzdrift bzw. die Entwicklung einer Fehlanpassung einander entsprechender Frequenzen nicht mit einer beliebig hohen Geschwindigkeit erfolgt, insbesondere deshalb, weil auch eine Temperaturänderung der Netzabschlusseinheiten nicht beliebig schnell erfolgt. Wird somit erfindungsgemäß sichergestellt, dass eine entsprechende Dienstinformation (d.h. eine erste Dienstinformation zur ersten Netzabschlusseinheit und eine zweite Dienstinformation zur zweiten Netzabschlusseinheit, etc.) zumindest beispielsweise alle 100 Sekunden oder zumindest alle 80 Sekunden oder zumindest alle 60 Sekunden oder zumindest alle 30 Sekunden oder zumindest alle 20 Sekunden oder zumindest alle 15 Sekunden oder zumindest alle 10 Sekunden oder zumindest alle 6 Sekunden oder zumindest alle 5 Sekunden oder zumindest alle 3 Sekunden oder zumindest alle 2 Sekunden oder zumindest jede Sekunde oder zumindest alle 500 Millisekunden oder zumindest alle 250 Millisekunden oder zumindest alle 100 Millisekunden erfolgt, so kann sichergestellt werden, dass kein physischer Verbindungsabbruch durch Fehlanpassung aufgrund einer unterbliebener Dienstinformation erfolgen kann.

Erfindungsgemäß ist es bevorzugt vorgesehen, dass die erste und/oder zweite Dienstinformation unter Verwendung jeweils einer Internet Protokoll Verbindung zwischen der Zentraleinheit und den jeweiligen Netzabschlusseinheiten übertragen wird.

Hierdurch ist eine vergleichsweise einfache und sichere Informationsübertragung der Dienstinformation erfindungsgemäß möglich.

Ferner ist es erfindungsgemäß bevorzugt vorgesehen, dass die Netzabschlusseinheiten jeweils eine Sendeeinrichtung für über den Lichtwellenleiter übertragene optische Signale und eine Empfangseinrichtung für über den Lichtwellenleiter übertragene optische Signale aufweisen, wobei die Veränderung der realen Multiplex-Sendefrequenz der jeweiligen Netzabschlusseinheit und/oder die Veränderung der jeweiligen realen Multiplex-Empfangsfrequenz der jeweiligen Netzabschlusseinheit in Abhängigkeit der jeweiligen Dienstinformation durch eine Konfigurationsänderung oder durch eine Ansteuerungsänderung oder durch eine lokal vorgenommene Temperaturveränderung der jeweiligen Sendeeinrichtung und/oder Empfangseinrichtung durchgeführt wird. Für die erste Netzabschlusseinheit bedeutet dies, dass die erste Netzabschlusseinheit eine erste Sendeeinrichtung für über den Lichtwellenleiter übertragene optische Signale und eine erste Empfangseinrichtung für über den Lichtwellenleiter übertragene optische Signale aufweist, wobei die Veränderung der ersten realen Multiplex-Sendefrequenz der ersten Netzabschlusseinheit und/oder die Veränderung der ersten realen Multiplex-Empfangsfrequenz der ersten Netzabschlusseinheit in Abhängigkeit der ersten Dienstinformation durch eine Konfigurationsänderung oder durch eine Ansteuerungsänderung oder durch eine lokal vorgenommene Temperaturveränderung der ersten Sendeeinrichtung und/oder der ersten Empfangseinrichtung durchgeführt wird. Entsprechend bedeutet dies für die zweite Netzabschlusseinheit, dass die zweite Netzabschlusseinheit eine zweite Sendeeinrichtung für über den Lichtwellenleiter übertragene optische Signale und eine zweite Empfangseinrichtung für über den Lichtwellenleiter übertragene optische Signale aufweist, wobei die Veränderung der zweiten realen Multiplex-Sendefrequenz der zweiten Netzabschlusseinheit und/oder die Veränderung der zweiten realen Multiplex-Empfangsfrequenz der zweiten Netzabschlusseinheit in Abhängigkeit der zweiten Dienstinformation durch eine Konfigurationsänderung oder durch eine Ansteuerungsänderung oder durch eine lokal vorgenommene Temperaturveränderung der zweiten Sendeeinrichtung und/oder der zweiten Empfangseinrichtung durchgeführt wird.

Hierdurch kann die Anpassung der jeweiligen Multiplex-Sendefrequenz bzw. die Anpassung der jeweiligen Multiplex-Empfangsfrequenz der jeweiligen Netzabschlusseinheit besonders schnell erfolgen.

Erfindungsgemäß ist es vorgesehen, dass der Dienstkanal gemäß einer ersten Ausführungsform ein physikalisch vom Lichtwellenleiter getrennter Übertragungskanal, insbesondere ein Übertragungskanal zur Übertragung elektrischer Spannungssignale, ist. Gemäß einer alternativen (oder kumulativen) zweiten Ausführungsform ist der Dienstkanal in Form einer optischen Datenübertragung unter Nutzung des Lichtwellenleiters vorgesehen, wobei für den Dienstkanal eine vorgegebene Dienstkanal-Multiplex-Frequenz des Wellenlängen-Multiplex-Schemas oder eine vorgegebene Dienstkanal-Frequenz außerhalb des Wellenlängen-Multiplex-Schemas verwendet wird. Alternativ (oder kumulativ) zur ersten und zweiten Ausführungsform des Dienstkanals ist es erfindungsgemäß vorgesehen, dass der Dienstkanal als logischer Dienstkanal unter Nutzung der vorgegebenen Multiplex-Frequenzen des Wellenlängen-Multiplex-Schemas jedenfalls in einer Abwärtsrichtung (down-link), von der Zentraleinheit zu den Netzabschlusseinheiten, verwendet wird.

Bei der ersten Ausführungsform des Dienstkanals ist es erforderlich, neben dem Lichtwellenleiter eine weitere Leitung (zum Transport und zur Übertragung der Dienstinformation) zwischen der Zentraleinheit einerseits und jeder der Netzabschlusseinheiten (d.h. parallel zum Lichtwellenleiter) vorzusehen. Ferner ist es in dieser Ausführungsform - für einen zumindest unidirektionalen Betrieb des Dienstkanals in Abwärtsrichtung - auch erforderlich, dass wenigstens eine (für insbesondere elektrische Signale geeignete) Sendeeinrichtung in der Zentraleinheit und jeweils eine (für insbesondere elektrische Signale geeignete) Empfangseinrichtung in jeder der Netzabschlusseinheiten vorhanden ist, was einen zusätzlichen Aufwand bedeutet. Andererseits ist eine solche Lösung im Betrieb auch besonders ausfallsicher, weil eine solche Konfiguration aufgrund der zusätzlichen Leitung parallel zum Lichtwellenleiter mit einer größeren Redundanz versehen ist. Ein bidirektionaler Betrieb des Dienstkanals gemäß der ersten Ausführungsform erfordert auch in jeder der Netzabschlusseinheiten eine (für insbesondere elektrische Signale geeignete) Sendeeinrichtung und eine (für insbesondere elektrische Signale geeignete) Empfangseinrichtung in der Zentraleinheit, was wiederum einen zusätzlichen Aufwand bedeutet. Die erste Ausführungsform des Dienstkanals kann auch mit der zweiten und/oder dritten Ausführungsform insofern kombiniert werden, dass der Dienstkanal parallel zum Lichtwellenleiter (d.h. über die weitere Leitung) lediglich unidirektional (insbesondere in Abwärtsrichtung bzw. parallel zur Abwärtsrichtung) ausgebildet ist, während die Aufwärtsrichtung über den Lichtwellenleiter geführt wird.

Bei der zweiten und dritten Ausführungsform des Dienstkanals ist es vorgesehen, dass die Dienstinformation(en) jedenfalls über den Lichtwellenleiter transportiert bzw. übertragen werden. Bei der zweiten Ausführungsform des Dienstkanals ist es vorgesehen, dass für den Dienstkanal eine vorgegebene Dienstkanal-Multiplex-Frequenz innerhalb des Wellenlängen-Multiplex-Schemas verwendet wird, d.h. ein dezidierter Frequenzkanal, welcher nicht einer der an den Lichtwellenleiter angeschlossenen Netzabschlusseinheiten zugeordnet ist. Alternativ hierzu ist es bei der zweiten Ausführungsform des Dienstkanals auch möglich, dass eine vorgegebene Dienstkanal-Frequenz außerhalb des Wellenlängen-Multiplex-Schemas verwendet wird, d.h. beispielsweise auf einem anderen Wellenlängen-Band (bzw. Frequenzband), welches für das Wellenlängen-Multiplex-Schema (d.h. für die für die Nutzdatenübertragung zwischen der Zentraleinheit einerseits und der Netzabschlusseinheiten andererseits verwendeten Frequenzkanäle) verwendet wird. Bei der dritten Ausführungsform des Dienstkanals ist es vorgesehen, dass der Dienstkanal als logischer Dienstkanal unter Nutzung der vorgegebenen Multiplex-Frequenzen des Wellenlängen-Multiplex-Schemas verwendet wird. Hierdurch wird die Übertragung der Dienstinformationen über den Dienstkanal in gleicher Weise abgewickelt wie die Übertragung der Nutzdaten zwischen der Zentraleinheit einerseits und den Netzabschlusseinheiten andererseits, d.h. die Dienstinformation wird "in-band" (d.h. unter ausschließlicher Nutzung der Nutzdatenkanäle) übertragen und der Dienstkanal ist lediglich als logischer Dienstkanal (jedoch nicht als physikalisch separater Dienstkanal) ausgebildet.
Ein weiterer Gegenstand der vorliegenden Erfindung ist ein System zur verbesserten Datenübertragung in einem Zugangsnetz eines Telekommunikationsnetzes, wobei das System als Teil des Zugangsnetzes einen Lichtwellenleiter, eine Zentraleinheit und eine Mehrzahl von Netzabschlusseinheiten aufweist,
wobei der Lichtwellenleiter von der Zentraleinheit zu einer ersten Netzabschlusseinheit und von der ersten Netzabschlusseinheit zu wenigstens einer zweiten Netzabschlusseinheit verläuft,
wobei zur Datenübertragung mittels des Lichtwellenleiters ein Wellenlängen-Multiplex-Schema mit einer Mehrzahl von verschiedenen vorgegebenen Multiplex-Frequenzen vorgesehen ist, wobei das System derart konfiguriert ist, dass in einer Aufwärtsrichtung (up-link), von den Netzabschlusseinheiten zur Zentraleinheit, von den Netzabschlusseinheiten eine Mehrzahl von verschiedenen vorgegebenen Multiplex-Sendefrequenzen verwendet wird, wobei eine erste vorgegebene Multiplex-Sendefrequenz der ersten Netzabschlusseinheit und eine zweite vorgegebene Multiplex-Sendefrequenz der zweiten Netzabschlusseinheit zugeordnet ist,
wobei zwischen der Zentraleinheit und den Netzabschlusseinheiten ein Dienstkanal vorhanden ist,
wobei das System ferner derart konfiguriert ist, dass - wenigstens für den Fall einer ausreichend großen Abweichung einer von der ersten Netzabschlusseinheit tatsächlich verwendeten ersten realen Multiplex-Sendefrequenz von der ersten vorgegebenen Multiplex-Sendefrequenz - von der Zentraleinheit über den Dienstkanal eine erste Dienstinformation zur ersten Netzabschlusseinheit übertragen wird, wobei die erste reale Multiplex-Sendefrequenz in Abhängigkeit der ersten Dienstinformation korrigiert wird,
wobei das System ferner derart konfiguriert ist, dass - wenigstens für den Fall einer ausreichend großen Abweichung einer von der zweiten Netzabschlusseinheit tatsächlich verwendeten zweiten realen Multiplex-Sendefrequenz von der zweiten vorgegebenen Multiplex-Sendefrequenz - von der Zentraleinheit über den Dienstkanal eine zweite Dienstinformation zur zweiten Netzabschlusseinheit übertragen wird, wobei die zweite reale Multiplex-Sendefrequenz in Abhängigkeit der zweiten Dienstinformation korrigiert wird.

Es ist hierdurch erfindungsgemäß - auch mit Bezug auf das System - vorteilhaft möglich, dass

Ferner bezieht sich die vorliegende Erfindung auch auf ein Computerprogramm mit Programmcodemitteln, mit deren Hilfe alle Schritte des erfindungsgemäßen Verfahrens durchführbar sind, wenn das Computerprogramm auf einer programmierbaren Einrichtung und/oder einer Zentraleinheit und/oder einer der Netzabschlusseinheiten, insbesondere in Teilen auf der Zentraleinheit und in Teilen auf den Netzabschlusseinheiten, ausgeführt wird.

Weiterhin ist Gegenstand der vorliegenden Erfindung ein Computerprogrammprodukt mit einem computerlesbaren Medium und einem auf dem computerlesbaren Medium gespeicherten Computerprogramm mit Programmcodemitteln, die dazu geeignet sind, dass alle Schritte des erfindungsgemäßen Verfahrens durchführbar sind, wenn das Computerprogramm auf einer programmierbaren Einrichtung und/oder einer Zentraleinheit und/oder einer der Netzabschlusseinheiten, insbesondere in Teilen auf der Zentraleinheit und in Teilen auf den Netzabschlusseinheiten, ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt eine schematische Ansicht eines Telekommunikationsnetzes mit einem Zugangsnetz, welches einen Lichtwellenleiter zwischen einer Zentraleinheit und einer Mehrzahl von Netzabschlusseinheiten des Zugangsnetzes aufweist.
- **Figur 2**: zeigt eine schematische Ansicht eines erfindungsgemäßen Systems als Teil eines Zugangsnetzes eines Telekommunikationsnetzes, wobei das System die Zentraleinheit, den Lichtwellenleiter und eine Mehrzahl von Netzabschlusseinheiten aufweist.
- **Figur 3**: zeigt eine schematische Ansicht des erfindungsgemäßen Systems in einer Detaildarstellung, wobei insbesondere der Dienstkanal dargestellt ist.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

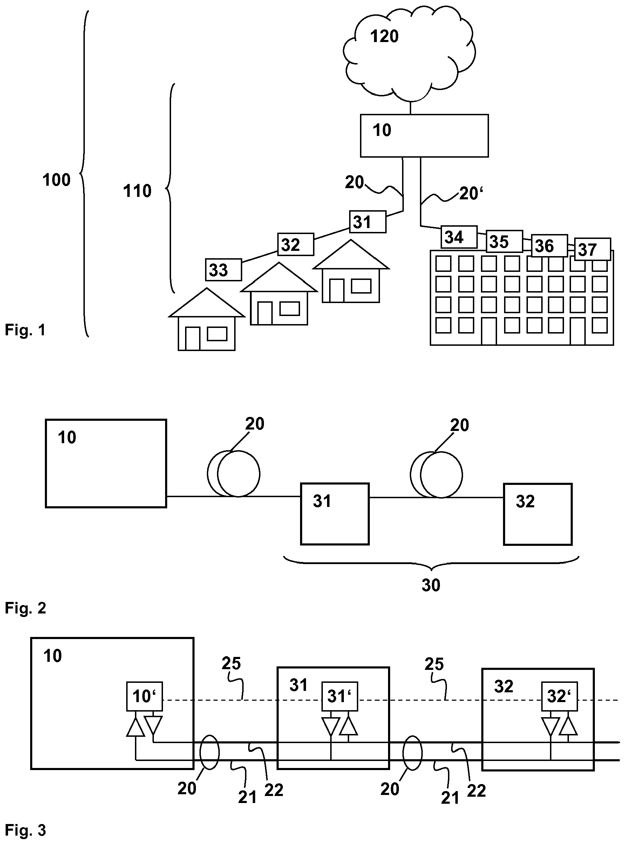

In Figur 1 ist schematisch eine Ansicht eines Telekommunikationsnetzes 100 mit einem Zugangsnetz 110 dargestellt, welches einen Lichtwellenleiter 20 zwischen einer Zentraleinheit 10 und einer Mehrzahl von Netzabschlusseinheiten 31, 32, 33 aufweist. Ein weiterer Lichtwellenleiter 20' ist von der Zentraleinheit 10 zu den weiteren Netzabschlusseinheiten 34, 35, 36, 37 angeordnet. Das Telekommunikationsnetz 100 weist beispielhaft neben dem Zugangsnetz 110 - umfassend insbesondere die Zentraleinheit 10 und die Netzabschlusseinheiten, welche zusammengefasst mit dem Bezugszeichen 30 bezeichnet werden (vgl. Figur 2) - noch weitere hierarchisch höher stehende Einheiten auf, die in Figur 1 schematisch und zusammenfassend mit einer Wolkendarstellung und dem Bezugszeichen 120 dargestellt sind.

Erfindungsgemäß ist es relevant, dass es sich bei der Verbindung zwischen der Zentraleinheit 10 und den Netzabschlusseinheiten 30 physikalisch nicht um eine sogenannte Punkt-zu-Punkt-Verbindung handelt (point-to-point-Verbindung), sondern um eine Punkt-zu-Mehrpunkt-Verbindung (point-to-multipoint-Verbindung). Dies bedeutet, dass an ein und demselben Lichtwellenleiter sowohl die Zentraleinheit 10 (an einem Ende des Lichtwellenleiters) als auch eine Mehrzahl von Netzabschlusseinheiten 30 (im Verlauf des Lichtwellenleiters bzw. am anderen Ende des Lichtwellenleiters).

In Figur 2 ist eine schematische Ansicht eines erfindungsgemäßen Systems als Teil eines Zugangsnetzes 110 eines Telekommunikationsnetzes 100 dargestellt, wobei das System die Zentraleinheit 10, den Lichtwellenleiter 20 und eine Mehrzahl von Netzabschlusseinheiten 30 aufweist. Die Netzabschlusseinheiten 30 umfassen insbesondere eine erste Netzabschlusseinheit 31 und eine zweite Netzabschlusseinheit 32, welche stellvertretend für eine Anzahl von Netzabschlusseinheiten 30 von typischerweise drei bis 30 Netzabschlusseinheiten, bevorzugt 5 bis 25 Netzabschlusseinheiten, besonders bevorzugt 10 bis 20 Netzabschlusseinheiten, stehen, die mit einer Zentraleinheit 10 verbunden sind. Der Lichtwellenleiter 20 verläuft von der Zentraleinheit 10 zur ersten Netzabschlusseinheit 31 und von der ersten Netzabschlusseinheit 31 zur zweiten Netzabschlusseinheit 32.

In Figur 3 ist eine schematische Ansicht des erfindungsgemäßen Systems in einer Detaildarstellung dargestellt. In Figur 3 ist insbesondere ein Dienstkanal 25 dargestellt, welcher Teil des Lichtwellenleiters 20 sein kann (gemäß einer zweiten und dritten Ausführungsform des Dienstkanals 25) oder auch separat zum Lichtwellenleiter 20 ausgeführt sein kann. Der Lichtwellenleiter 20 ist in Figur 3 als ein Lichtwellenleiter 20 dargestellt, welcher einen ersten Übertragungskanal 21 in Aufwärtsrichtung (d.h. in Richtung zur Zentraleinheit 10 hin) und einen zweiten Übertragungskanal 22 in Abwärtsrichtung (d.h. in Richtung von der Zentraleinheit 10 weg zu den Netzabschlusseinheiten 31, 32 hin) aufweist. Physikalisch können beide Übertragungskanäle 21, 22 insbesondere in ein und demselben Lichtwellenleiter 20 (bzw. in ein und derselben Lichtwellenleiter-Faser) realisiert sein. Alternativ hierzu können die beiden Übertragungskanäle 21, 22 auch physikalisch getrennt ausgeführt (d.h. insbesondere in zwei verschiedenen Lichtwellenleiter-Fasern) realisiert sein. Die Zentraleinheit 10 weist eine Steuereinrichtung 10' zur Ansteuerung einer in der Zentraleinheit 10 angeordneten, jedoch nicht mit einem Bezugszeichen versehenen Empfangseinrichtung und einer ebenfalls in der Zentraleinheit 10 angeordneten, jedoch ebenfalls nicht mit einem Bezugszeichen versehenen Sendeeinrichtung auf. Die Steuereinrichtung 10' der Zentraleinheit 10 ist ferner mit dem Dienstkanal 25 (bzw. Steuerkanal) verbunden. Die erste Netzabschlusseinheit 31 weist eine erste Steuereinrichtung 31' zur Ansteuerung einer in der ersten Netzabschlusseinheit 31 angeordneten, jedoch nicht mit einem Bezugszeichen versehenen Empfangseinrichtung und einer ebenfalls in der ersten Netzabschlusseinheit 31 angeordneten, jedoch ebenfalls nicht mit einem Bezugszeichen versehenen Sendeeinrichtung auf. Die erste Steuereinrichtung 31' der ersten Netzabschlusseinheit 31 ist ferner mit dem Dienstkanal 25 (bzw. Steuerkanal) verbunden. Die zweite Netzabschlusseinheit 32 weist eine zweite Steuereinrichtung 32' zur Ansteuerung einer in der zweiten Netzabschlusseinheit 32 angeordneten, jedoch nicht mit einem Bezugszeichen versehenen Empfangseinrichtung und einer ebenfalls in der zweiten Netzabschlusseinheit 32 angeordneten, jedoch ebenfalls nicht mit einem Bezugszeichen versehenen Sendeeinrichtung auf. Die zweite Steuereinrichtung 32' der zweiten Netzabschlusseinheit 32 ist ebenfalls mit dem Dienstkanal 25 (bzw. Steuerkanal) verbunden.

Erfindungsgemäß ist es vorgesehen, dass eine (ausreichend große) Abweichung der Abstimmung der Multiplex-Sendefrequenzen bzw. der Multiplex-Empfangsfrequenzen von miteinander über den Lichtwellenleiter 20 kommunizierenden Sendeeinrichtungen bzw. Empfangseinrichtungen (der Zentraleinheit 10 bzw. der ersten bzw. der zweiten Netzabschlusseinheit 31, 32) dazu führt, dass eine Dienstinformation von der Zentraleinheit 10 über den Lichtwellenleiter 20 zu der jeweiligen Netzabschlusseinheit 31, 32 (d.h. zur ersten Netzabschlusseinheit 31 im Falle einer ausreichend großen Abweichung der Abstimmung der ersten realen Multiplex-Sendefrequenz bzw. der ersten realen Multiplex-Empfangsfrequenz (zu der ersten vorgegebenen Multiplex-Sendefrequenz bzw. der ersten vorgegebenen Multiplex-Empfangsfrequenz) bzw. zur zweiten Netzabschlusseinheit 32 im Falle einer ausreichend großen Abweichung der Abstimmung der zweiten realen Multiplex-Sendefrequenz bzw. der zweiten realen Multiplex-Empfangsfrequenz (zu der zweiten vorgegebenen Multiplex-Sendefrequenz bzw. der zweiten vorgegebenen Multiplex-Empfangsfrequenz)) übertragen wird, deren Empfang in der jeweiligen Netzabschlusseinheit 31, 32 - insbesondere in der jeweiligen Steuereinrichtung 31', 32' - zur Folge hat, dass eine Anpassung bzw. Änderung der ersten realen Multiplex-Sendefrequenz bzw. ersten realen Multiplex-Empfangsfrequenz bzw. der zweiten realen Multiplex-Sendefrequenz bzw. zweiten realen Multiplex-Empfangsfrequenz erfolgt.

## Patentansprüche

1. Verfahren zur verbesserten Datenübertragung in einem Zugangsnetz (110) eines Telekommunikationsnetzes (100), wobei das Zugangsnetz (110) einen Lichtwellenleiter (20) aufweist,
wobei der Lichtwellenleiter (20) zwischen einer Zentraleinheit (10) und einer Mehrzahl von Netzabschlusseinheiten (30) des Zugangsnetzes (110) derart angeordnet ist, dass der Lichtwellenleiter (20) von der Zentraleinheit (10) zu einer ersten Netzabschlusseinheit (31) und von der ersten Netzabschlusseinheit (31) zu wenigstens einer zweiten Netzabschlusseinheit (32) verläuft,
wobei zur Datenübertragung mittels des Lichtwellenleiters (20) ein Wellenlängen-Multiplex-Schema mit einer Mehrzahl von verschiedenen vorgegebenen Multiplex-Frequenzen verwendet wird, wobei in einer Aufwärtsrichtung (up-link), von den Netzabschlusseinheiten (30) zur Zentraleinheit (10), von den Netzabschlusseinheiten (30) eine Mehrzahl von verschiedenen vorgegebenen Multiplex-Sendefrequenzen verwendet wird, wobei eine erste vorgegebene Multiplex-Sendefrequenz der ersten Netzabschlusseinheit (31) und eine zweite vorgegebene Multiplex-Sendefrequenz der zweiten Netzabschlusseinheit (32) zugeordnet ist,
wobei zwischen der Zentraleinheit (10) und den Netzabschlusseinheiten (30) ein Dienstkanal (25) vorhanden ist,
wobei-für den Fall einer ausreichend großen Abweichung einer von der ersten Netzabschlusseinheit (31) tatsächlich verwendeten ersten realen Multiplex-Sendefrequenz von der ersten vorgegebenen Multiplex-Sendefrequenz - von der Zentraleinheit (10) über den Dienstkanal (25) eine erste Dienstinformation zur ersten Netzabschlusseinheit (31) übertragen wird, wobei die erste reale Multiplex-Sendefrequenz in Abhängigkeit der ersten Dienstinformation verändert wird und wobei - für den Fall einer ausreichend großen Abweichung einer von der zweiten Netzabschlusseinheit (31) tatsächlich verwendeten zweiten realen Multiplex-Sendefrequenz von der zweiten vorgegebenen Multiplex-Sendefrequenz - von der Zentraleinheit (10) über den Dienstkanal (25) eine zweite Dienstinformation zur zweiten Netzabschlusseinheit (32) übertragen wird, wobei die zweite reale Multiplex-Sendefrequenz in Abhängigkeit der zweiten Dienstinformation verändert wird, **dadurch gekennzeichnet, dass** der Dienstkanal (25) in Form einer optischen Datenübertragung unter Nutzung des Lichtwellenleiters (20) vorgesehen ist, wobei für den Dienstkanal (25) eine vorgegebene Dienstkanal-Multiplex-Frequenz des Wellenlängen-Multiplex-Schemas oder eine vorgegebene Dienstkanal-Frequenz außerhalb des Wellenlängen-Multiplex-Schemas verwendet wird., wobei die physikalische Verbindung zwischen der Zentraleinheit (10) und den Netzabschlusseinheiten (30) eine Punkt-zu-Mehrpunkt-Verbindung (point-to-multipoint-Verbindung) ist..

2. Verfahren nach Anspruch 1, **dadurch gekennzeichnet, dass** der Dienstkanal (25) ein physikalisch vom Lichtwellenleiter (20) getrennter Übertragungskanal, insbesondere ein Übertragungskanal zur Übertragung elektrischer Spannungssignale, ist.

3. Verfahren nach Anspruch 1, **dadurch gekennzeichnet, dass** der Dienstkanal (25) als logischer Dienstkanal unter Nutzung der vorgegebenen Multiplex-Frequenzen des Wellenlängen-Multiplex-Schemas in einer Abwärtsrichtung (down-link), von der Zentraleinheit (10) zu den Netzabschlusseinheiten (30), verwendet wird.

4. Verfahren nach einem der vorhergehenden Ansprüche, **dadurch gekennzeichnet, dass** in einer Abwärtsrichtung (down-link), von der Zentraleinheit (10) zu den Netzabschlusseinheiten (30), von den Netzabschlusseinheiten (30) eine Mehrzahl von verschiedenen vorgegebenen Multiplex-Empfangsfrequenzen verwendet wird,
wobei eine erste vorgegebene Multiplex-Empfangsfrequenz der ersten Netzabschlusseinheit (31) und eine zweite vorgegebene Multiplex-Empfangsfrequenz der zweiten Netzabschlusseinheit (32) zugeordnet ist,
wobei die erste reale Multiplex-Empfangsfrequenz in Abhängigkeit der ersten Dienstinformation verändert wird und wobei die zweite reale Multiplex-Empfangsfrequenz in Abhängigkeit der zweiten Dienstinformation verändert wird.

5. Verfahren nach einem der vorhergehenden Ansprüche, **dadurch gekennzeichnet, dass** die erste und/oder die zweite Dienstinformation mit einer vorgegebenen Mindestwiederholrate von der Zentraleinheit (10) über den Dienstkanal (25) übertragen wird.

6. Verfahren nach einem der vorhergehenden Ansprüche, **dadurch gekennzeichnet, dass** die erste und/oder zweite Dienstinformation unter Verwendung jeweils einer Internet Protokoll Verbindung zwischen der Zentraleinheit (10) und den jeweiligen Netzabschlusseinheiten (30) übertragen wird.

7. Verfahren nach einem der vorhergehenden Ansprüche, **dadurch gekennzeichnet, dass** die Netzabschlusseinheiten (30) jeweils eine Sendeeinrichtung für über den Lichtwellenleiter (20) übertragene optische Signale und eine Empfangseinrichtung für über den Lichtwellenleiter (20) übertragene optische Signale aufweisen, wobei die Veränderung der realen Multiplex-Sendefrequenz der jeweiligen Netzabschlusseinheit und/oder die Veränderung der jeweiligen realen Multiplex-Empfangsfrequenz der jeweiligen Netzabschlusseinheit in Abhängigkeit der jeweiligen Dienstinformation durch eine Konfigurationsänderung oder durch eine Ansteuerungsänderung oder durch eine lokal vorgenommene Temperaturveränderung der jeweiligen Sendeeinrichtung und/oder Empfangseinrichtung durchgeführt wird.

8. Verfahren nach einem der vorhergehenden Ansprüche, **dadurch gekennzeichnet, dass** die Zentraleinheit (10) im Vergleich zu den Netzabschlusseinheiten (30) temperaturstabilisierter angeordnet ist.

9. System zur verbesserten Datenübertragung in einem Zugangsnetz (110) eines Telekommunikationsnetzes (100), wobei das System als Teil des Zugangsnetzes (110) einen Lichtwellenleiter (20), eine Zentraleinheit (10) und eine Mehrzahl von Netzabschlusseinheiten (30) aufweist,
wobei der Lichtwellenleiter (20) von der Zentraleinheit (10) zu einer ersten Netzabschlusseinheit (31) und von der ersten Netzabschlusseinheit (31) zu wenigstens einer zweiten Netzabschlusseinheit (32) verläuft,
wobei zur Datenübertragung mittels des Lichtwellenleiters (20) ein Wellenlängen-Multiplex-Schema mit einer Mehrzahl von verschiedenen vorgegebenen Multiplex-Frequenzen vorgesehen ist, wobei das System derart konfiguriert ist, dass in einer Aufwärtsrichtung (up-link), von den Netzabschlusseinheiten (30) zur Zentraleinheit (10), von den Netzabschlusseinheiten (30) eine Mehrzahl von verschiedenen vorgegebenen Multiplex-Sendefrequenzen verwendet wird, wobei eine erste vorgegebene Multiplex-Sendefrequenz der ersten Netzabschlusseinheit (31) und eine zweite vorgegebene Multiplex-Sendefrequenz der zweiten Netzabschlusseinheit (32) zugeordnet ist,
wobei zwischen der Zentraleinheit (10) und den Netzabschlusseinheiten (30) ein Dienstkanal (25) vorhanden ist,
wobei das System ferner derart konfiguriert ist, dass - für den Fall einer ausreichend großen Abweichung einer von der ersten Netzabschlusseinheit (31) tatsächlich verwendeten ersten realen Multiplex-Sendefrequenz von der ersten vorgegebenen Multiplex-Sendefrequenz - von der Zentraleinheit (10) über den Dienstkanal (25) eine erste Dienstinformation zur ersten Netzabschlusseinheit (31) übertragen wird, wobei die erste reale Multiplex-Sendefrequenz in Abhängigkeit der ersten Dienstinformation korrigiert wird,
wobei das System ferner derart konfiguriert ist, dass - für den Fall einer ausreichend großen Abweichung einer von der zweiten Netzabschlusseinheit (31) tatsächlich verwendeten zweiten realen Multiplex-Sendefrequenz von der zweiten vorgegebenen Multiplex-Sendefrequenz - von der Zentraleinheit (10) über den Dienstkanal (25) eine zweite Dienstinformation zur zweiten Netzabschlusseinheit (32) übertragen wird, wobei die zweite reale Multiplex-Sendefrequenz in Abhängigkeit der zweiten Dienstinformation korrigiert wird, **dadurch gekennzeichnet, dass** der Dienstkanal (25) in Form einer optischen Datenübertragung unter Nutzung des Lichtwellenleiters (20) vorgesehen ist, wobei für den Dienstkanal (25) eine vorgegebene Dienstkanal-Multiplex-Frequenz des Wellenlängen-Multiplex-Schemas oder eine vorgegebene Dienstkanal-Frequenz außerhalb des Wellenlängen-Multiplex-Schemas verwendet wird.

10. Computerprogramm mit Programmcodemitteln, mit deren Hilfe alle Schritte eines Verfahrens nach einem der Ansprüche 1 bis 9 durchführbar sind, wenn das Computerprogramm auf einer programmierbaren Einrichtung und/oder einer Zentraleinheit (10) und/oder einer der Netzabschlusseinheiten (30), insbesondere in Teilen auf der Zentraleinheit (10) und in Teilen auf den Netzabschlusseinheiten (30), ausgeführt wird.

11. Computerprogrammprodukt mit einem computerlesbaren Medium und einem auf dem computerlesbaren Medium gespeicherten Computerprogramm mit Programmcodemitteln, die dazu geeignet sind, dass alle Schritte eines Verfahrens nach einem der Ansprüche 1 bis 9 durchführbar sind, wenn das Computerprogramm auf einer programmierbaren Einrichtung und/oder einer Zentraleinheit (10) und/oder einer der Netzabschlusseinheiten (30), insbesondere in Teilen auf der Zentraleinheit (10) und in Teilen auf den Netzabschlusseinheiten (30), ausgeführt wird.

## Claims

1. Method for improved data transfer in an access network (110) of a telecommunication network (100), wherein the access network (110) comprises an optical waveguide (20),
wherein the optical waveguide (20) is disposed between a central unit (10) and a plurality of network termination units (30) of the access network (110) in such a way that the optical waveguide (20) extends from the central unit (10) to a first network termination unit (31) and from the first network termination unit (31) to at least one second network termination unit (32),
wherein for the purpose of data transfer by means of the optical waveguide (20) a wavelength division multiplex scheme with a plurality of different preset multiplex frequencies is used, wherein in an upwards direction (up-link) from the network termination units (30) to the central unit (10) a plurality of different preset multiplex transmission frequencies are used by the network termination units (30), wherein a first preset multiplex transmission frequency is allocated to the first network termination unit (31) and a second preset multiplex transmission frequency is allocated to the second network termination unit (32),
wherein a service channel (25) is provided between the central unit (10) and the network termination units (30),
wherein - for the case where there is sufficiently great deviation of a first real multiplex transmission frequency, actually used by the first network termination unit (31), from the first preset multiplex transmission frequency - a first item of service information is transferred to the first network termination unit (31) from the central unit (10) via the service channel (25), wherein the first real multiplex transmission frequency is modified in dependence upon the first item of service information and
wherein - for the case where there is sufficiently great deviation of a second real multiplex transmission frequency, actually used by the second network termination unit (31), from the second preset multiplex transmission frequency - a second item of service information is transferred to the second network termination unit (32) from the central unit (10) via the service channel (25), wherein the second real multiplex transmission frequency is modified in dependence upon the second item of service information,
**characterised in that** the service channel (25) is provided in the form of an optical data transfer using the optical waveguide (20), wherein a preset service channel multiplex frequency of the wavelength division multiplex scheme or a preset service channel frequency outside the wavelength division multiplex scheme is used for the service channel (25), wherein the physical connection between the central unit (10) and the network termination units (30) is a point-to-multipoint connection.

2. Method as claimed in claim 1, **characterised in that** the service channel (25) is a transfer channel physically separate from the optical waveguide (20), in particular a transfer channel to transfer electric voltage signals.

3. Method as claimed in claim 1, **characterised in that** the service channel (25) is used as a logical service channel using the preset multiplex frequencies of the wavelength division multiplex scheme in a downwards direction (down-link) from the central unit (10) to the network termination units (30).

4. Method as claimed in any one of the preceding claims,
**characterised in that** in a downwards direction (down-link) from the central unit (10) to the network termination units (30), a plurality of different preset multiplex reception frequencies are used by the network termination units (30),
wherein a first preset multiplex reception frequency is allocated to the first network termination unit (31) and a second preset multiplex reception frequency is allocated to the second network termination unit (32),
wherein the first real multiplex reception frequency is modified in dependence upon the first item of service information and wherein the second real multiplex reception frequency is modified in dependence upon the second item of service information.

5. Method as claimed in any one of the preceding claims,
**characterised in that** the first and/or second item of service information is transferred from the central unit (10) via the service channel (25) at a preset minimum repetition rate.

6. Method as claimed in any one of the preceding claims,
**characterised in that** the first and/or second item of service information is transferred using in each case an internet protocol connection between the central unit (10) and the respective network termination units (30).

7. Method as claimed in any one of the preceding claims,
**characterised in that** the network termination units (30) each comprise a transmission device for optical signals transferred via the optical waveguide (20), and a reception device for optical signals transferred via the optical waveguide (20), wherein the modification of the real multiplex transmission frequency of the respective network termination unit and/or the modification of the respective real multiplex reception frequency of the respective network termination unit is carried out in dependence upon the respective item of service information by a change in configuration or by a change in actuation or by a locally effected change in temperature of the respective transmission device and/or reception device.

8. Method as claimed in any one of the preceding claims,
**characterised in that** the central unit (10) is disposed in a temperature-stabilising manner in comparison to the network termination units (30).

9. System for improved data transfer in an access network (110) of a telecommunication network (100), wherein the system as part of the access network (110) comprises an optical waveguide (20), a central unit (10) and a plurality of network termination units (30),
wherein the optical waveguide (20) extends from the central unit (10) to a first network termination unit (31) and from the first network termination unit (31) to at least one second network termination unit (32),
wherein for the purpose of data transfer by means of the optical waveguide (20) a wavelength division multiplex scheme with a plurality of different preset multiplex frequencies is provided, wherein the system is configured in such a way that in an upwards direction (up-link), from the network termination units (30) to the central unit (10), a plurality of different preset multiplex transmission frequencies are used by the network termination units (30), wherein a first preset multiplex transmission frequency is allocated to the first network termination unit (31) and a second preset multiplex transmission frequency is allocated to the second network termination unit (32),
wherein a service channel (25) is provided between the central unit (10) and the network termination units (30), wherein the system is further configured in such a way that
- for the case where there is sufficiently great deviation of a first real multiplex transmission frequency, actually used by the first network termination unit (31), from the first preset multiplex transmission frequency - a first item of service information is transferred to the first network termination unit (31) from the central unit (10) via the service channel (25), wherein the first real multiplex transmission frequency is corrected in dependence upon the first item of service information,
wherein the system is further configured in such a way that
- for the case where there is sufficiently great deviation of a second real multiplex transmission frequency, actually used by the second network termination unit (31), from the second preset multiplex transmission frequency - a second item of service information is transferred to the second network termination unit (32) from the central unit (10) via the service channel (25), wherein the second real multiplex transmission frequency is corrected in dependence upon the second item of service information, **characterised in that** the service channel (25) is provided in the form of an optical data transfer using the optical waveguide (20), wherein a preset service channel multiplex frequency of the wavelength division multiplex scheme or a preset service channel frequency outside the wavelength division multiplex scheme is used for the service channel (25).

10. Computer program with program code means, with the aid of which all steps of a method as claimed in any one of claims 1 to 9 can be carried out when the computer program is executed on a programmable device and/or a central unit (10) and/or one of the network termination units (30), in particular in parts on the central unit (10) and in parts on the network termination units (30).

11. Computer program product with a computer-readable medium and a computer program, stored on the computer-readable medium, having program code means which are arranged so that all steps of a method according to any one of claims 1 to 9 can be carried out when the computer program is executed on a programmable device and/or a central unit (10) and/or one of the network termination units (30), in particular in parts on the central unit (10) and in parts on the network termination units (30).

## Revendications

1. Procédé destiné à la transmission de données améliorée dans un réseau d'accès (110) d'un réseau de télécommunication (100), le réseau d'accès (110) présentant une fibre optique (20),
la fibre optique (20) étant disposée entre une unité centrale (10) et une pluralité d'unités de terminaison de réseau (30) du réseau d'accès (110) de telle manière que la fibre optique (20) s'étend de l'unité centrale (10) à une première unité de terminaison de réseau (31) et de la première unité de terminaison de réseau (31) à au moins une seconde unité de terminaison de réseau (32),
un schéma de multiplexage en longueur d'onde avec une pluralité de différentes fréquences de multiplexage prédéfinies étant utilisé pour la transmission de données au moyen de la fibre optique (20), une pluralité de différentes fréquences d'émission de multiplexage prédéfinies étant utilisées par les unités de terminaison de réseau (30) dans une liaison montante (uplink), des unités de terminaison de réseau (30) à l'unité centrale (10), une première fréquence d'émission de multiplexage prédéfinie étant associée à la première unité de terminaison de réseau (31) et une seconde fréquence d'émission de multiplexage prédéfinie étant associée à la seconde unité de terminaison de réseau (32),
un canal de service (25) se trouvant entre l'unité centrale (10) et les unités de terminaison de réseau (30),
dans lequel - dans le cas d'un écart suffisamment élevé entre une première fréquence d'émission de multiplexage réelle effectivement utilisée par la première unité de terminaison de réseau (31) et la première fréquence d'émission de multiplexage prédéfinie - une première information de service est transmise par l'unité centrale (10) à la première unité de terminaison de réseau (31) par le biais du canal de service (25), la première fréquence d'émission de multiplexage réelle étant modifiée en fonction de la première information de service et dans lequel - dans le cas d'un écart suffisamment élevé entre une seconde fréquence d'émission de multiplexage réelle effectivement utilisée par la seconde unité de terminaison de réseau (31) et la seconde fréquence d'émission de multiplexage prédéfinie - une seconde information de service est transmise par l'unité centrale (10) à la seconde unité de terminaison de réseau (32) par le biais du canal de service (25), la seconde fréquence d'émission de multiplexage réelle étant modifiée en fonction de la seconde information de service, **caractérisé en ce que** le canal de service (25) est prévu sous la forme d'une transmission optique de données au moyen de la fibre optique (20), une fréquence de multiplexage de canal de service prédéfinie du schéma de multiplexage en longueur d'onde ou une fréquence de canal de service prédéfinie hors du schéma de multiplexage en longueur d'onde étant utilisée pour le canal de service (25), la liaison physique entre l'unité centrale (10) et les unités de terminaison de réseau (30) étant une liaison point à multipoint (liaison point-to-multipoint).

2. Procédé selon la revendication 1, **caractérisé en ce que** le canal de service (25) est un canal de transmission séparé physiquement de la fibre optique (20), en particulier un canal de transmission destiné à la transmission de signaux électriques de tension.

3. Procédé selon la revendication 1, **caractérisé en ce que** le canal de service (25) est utilisé comme canal de service logique en utilisant les fréquences de multiplexage prédéfinies du schéma de multiplexage en longueur d'onde dans une liaison descendante (downlink), de l'unité centrale (10) aux unités de terminaison de réseau (30).

4. Procédé selon l'une des revendications précédentes, **caractérisé en ce que**, dans une liaison descendante (downlink), de l'unité centrale (10) aux unités de terminaison de réseau (30), une pluralité de différentes fréquences de réception de multiplexage prédéfinies est utilisée par les unités de terminaison de réseau (30), une première fréquence de réception de multiplexage prédéfinie étant associée à la première unité de terminaison de réseau (31) et une seconde fréquence de réception de multiplexage prédéfinie étant associée à la seconde unité de terminaison de réseau (32), la première fréquence de réception de multiplexage réelle étant modifiée en fonction de la première information de service et la seconde fréquence de réception de multiplexage réelle étant modifiée en fonction de la seconde information de service.

5. Procédé selon l'une des revendications précédentes, **caractérisé en ce que** la première et/ou la seconde information de service est transmise par l'unité centrale (10) par le biais du canal de service (25) avec un taux de répétition minimal prédéfini.

6. Procédé selon l'une des revendications précédentes, **caractérisé en ce que** la première et/ou la seconde information de service est transmise au moyen respectivement d'une liaison par protocole Internet entre l'unité centrale (10) et les unités de terminaison de réseau (30) respectives.

7. Procédé selon l'une des revendications précédentes, **caractérisé en ce que** les unités de terminaison de réseau (30) présentent respectivement un moyen d'émission pour signaux optiques transmis par la fibre optique (20) et un moyen de réception pour signaux optiques transmis par la fibre optique (20), la modification de la fréquence d'émission de multiplexage réelle de l'unité de terminaison de réseau respective et/ou la modification de la fréquence de réception de multiplexage réelle respective de l'unité de terminaison de réseau respective étant effectuée en fonction de l'information de service respective par une modification de la configuration ou par une modification de la commande ou par une modification de la température effectuée localement du moyen d'émission et/ou du moyen de réception respectif.

8. Procédé selon l'une des revendications précédentes, **caractérisé en ce que** l'unité centrale (10) est disposée à température plus stabilisée par comparaison aux unités de terminaison de réseau (30).

9. Système destiné à la transmission de données améliorée dans un réseau d'accès (110) d'un réseau de télécommunication (100), le système présentant une fibre optique (20), une unité centrale (10) et une pluralité d'unités de terminaison de réseau (30) comme partie du réseau d'accès (110),
la fibre optique (20) s'étendant de l'unité centrale (10) à une première unité de terminaison de réseau (31) et de la première unité de terminaison de réseau (31) à au moins une seconde unité de terminaison de réseau (32),
un schéma de multiplexage en longueur d'onde avec une pluralité de différentes fréquences de multiplexage prédéfinies étant prévu pour la transmission de données au moyen de la fibre optique (20), le système étant configuré de telle manière qu'une pluralité de différentes fréquences d'émission de multiplexage prédéfinies est utilisée par les unités de terminaison de réseau (30) dans une liaison montante (uplink), des unités de terminaison de réseau (30) à l'unité centrale (10), une première fréquence d'émission de multiplexage prédéfinie étant associée à la première unité de terminaison de réseau (31) et une seconde fréquence d'émission de multiplexage prédéfinie étant associée à la seconde unité de terminaison de réseau (32), un canal de service (25) se trouvant entre l'unité centrale (10) et les unités de terminaison de réseau (30),
le système étant en outre configuré de telle manière que - dans le cas d'un écart suffisamment élevé entre une fréquence d'émission de multiplexage réelle effectivement utilisée par la première unité de terminaison de réseau (31) et la première fréquence d'émission de multiplexage prédéfinie - une première information de service est transmise par l'unité centrale (10) à la première unité de terminaison de réseau (31) par le biais du canal de service (25), la première fréquence d'émission de multiplexage réelle étant corrigée en fonction de la première information de service,
le système étant en outre configuré de telle manière que - dans le cas d'un écart suffisamment élevé entre une seconde fréquence d'émission de multiplexage réelle effectivement utilisée par la seconde unité de terminaison de réseau (31) et la seconde fréquence d'émission de multiplexage prédéfinie - une seconde information de service est transmise par l'unité centrale (10) à la seconde unité de terminaison de réseau (32) par le biais du canal de service (25), la seconde fréquence d'émission de multiplexage réelle étant corrigée en fonction de la seconde information de service, **caractérisé en ce que** le canal de service (25) est prévu sous la forme d'une transmission optique de données au moyen de la fibre optique (20), une fréquence de multiplexage de canal de service prédéfinie du schéma de multiplexage en longueur d'onde ou une fréquence de canal de service prédéfinie hors du schéma de multiplexage en longueur d'onde étant utilisée pour le canal de service (25) .

10. Programme informatique comprenant des moyens de code de programme, à l'aide desquels toutes les étapes d'un procédé selon l'une des revendications 1 à 9 peuvent être effectuées quand le programme informatique est exécuté sur un moyen programmable et/ou une unité centrale (10) et/ou une des unités de terminaison de réseau (30), en particulier en partie sur l'unité centrale (10) et en partie sur les unités de terminaison de réseau (30).

11. Produit programme informatique comprenant un support lisible par ordinateur et un programme informatique enregistré sur le support lisible par ordinateur et comprenant des moyens de code de programme, qui sont adaptés pour que toutes les étapes d'un procédé selon l'une des revendications 1 à 9 puissent être effectuées quand le programme informatique est exécuté sur un moyen programmable et/ou une unité centrale (10) et/ou une des unités de terminaison de réseau (30), en particulier en partie sur l'unité centrale (10) et en partie sur les unités de terminaison de réseau (30).
